# FASCICULE DE BREVET EUROPEEN

(11) **EP 0 330 571 B1**
(45) Date de publication et mention de la délivrance du brevet: **16.06.1993**
(21) Numéro de dépôt: 89400502.4
(22) Date de dépôt: 23.02.1989
(51) Int. Cl.: G02B 6/44

(54) **Dispositif de rétention mécanique pour câble à fibres optiques à structure libre**
Mechanische Haltevorrichtung für optische Kabel mit freier Struktur
Mechanical retention device for optical cables with a free structure

(30) Priorité: 23.02.1988 FR 8802167
(43) Date de publication de la demande: 30.08.1989
(73) Titulaire: AMPHENOL SOCAPEX Société Anonyme, F-92403 Courbevoie Cédex (FR)
(72) Inventeur: Kayoun, Pierre, F-92100 Boulogne Billancourt (FR); Pouyez, Philippe, F-92700 Colombes (FR)
(74) Mandataire: Dronne, Guy

(56) Documents cités:
- EP-A- 0 063 506
- DE-A- 3 234 484
- DE-A- 3 414 363
- US-A- 4 460 159

## Description

La présente invention concerne un dispositif de rétention mécanique pour cable à fibres optiques à structure libre.

A leurs extrémités, les câbles à fibres optiques doivent être raccordés mécaniquement sur des appareils, les fibres optiques elles-mêmes étant connectées à des dispositifs de traitement optique reçus dans ces appareils.

Pour éviter de transmettre aux fibres les efforts exercés sur la gaine extérieure du câble, on a coutume de réaliser des câbles dits "à structure libre", c'est-à-dire dans lesquels les fibres sont libres par rapport aux autres constituants du câble.

Typiquement, ces câbles sont composés d'un jonc sensiblement cylindrique, éventuellement renforcé par un porteur central, pourvu de rainures en hélice à sa périphérie, chaque rainure recevant librement une fibre optique, et d'une gaine protectrice extérieure, avec éventuellement interposition d'une chemise de mèches tressées.

L'ensemble est dit à structure libre puisque les fibres optiques ne supportent pas les efforts impartis aux éléments mécaniques du câble, du fait de leur montage libre dans les rainures du jonc.

Cependant, aux extrémités de tels câbles, il est particulièrement peu commode de réaliser des dispositifs de rétention mécanique qui respectent la structure libre.

Dans le montage illustré par exemple dans la demande FR 85 14765, on procède au blocage du porteur dans un embout central et au serrage du câble sur sa gaine de protection, par deux moyens distincts et raccordés l'un à l'autre.

Une telle solution est peu commode à mettre en oeuvre et présente une résistance à la traction relativement limitée. En effet, le glissement du câble commence à se produire vers 30 daN (30 kgf) et la rupture de la fixation se produit vers 70 daN (70 kgf).

La présente invention vise à assurer une rétention de bonne qualité jusqu'à des efforts de l'ordre de 150 daN (150 kgf) à 200 daN (200 kgf), à l'aide de moyens simples à mettre en oeuvre.

Le document US 4 460 159 concerne un dispositif de rétention mécanique pour câble à fibres optiques à structure libre, ce cable étant composé d'au moins un jonc sensiblement cylindrique pourvu de rainures à sa périphérie, dans lesquelles sont reçues librement les fibres optiques, et d'une gaine protectrice extérieure, ce dispositif comprenant un bloc de rétention moulé directement autour du jonc et de la gaine protectrice sur une portion dénudée de chacun d'eux.

Le document EP-A-0 063 506 décrit un système qui permet seulement l'éclatement de l'extrémité d'un câble constitué par plusieurs fibres optiques et non sa rétention. En outre, il ne prévoit pas un moulage direct des gaines des fibres p ar un bloc de rétention.

Conformément à la présente invention, le dispositif de rétention mécanique pour une extrémité d'un câble à fibres optiques à structure libre, ledit câble étant composé au moins d'un jonc sensiblement cylindrique pourvu de rainures à sa périphérie, dans lesquelles sont reçues librement les fibres optiques, et d'une gaine protectrice extérieure, comprend un boîtier et un fourreau de passage pour chaque fibre qui le traverse librement. Il se caractérise en ce qu'il comprend en outre un bloc de rétention moulé directement autour d'une portion de la gaine et directement autour d'une portion du jonc dénuée de ladite gaine, lesdites portions étant adjacentes, en ce que lesdits fourreaux se prolongent d'un côté entre la gaine protectrice et les rainures respectives du jonc, lesdits fourreaux étant moulés dans ledit bloc de rétention et traversant celui-ci.

Ainsi le bloc de rétention, du fait qu'il est moulé autour de la gaine et du jonc, de même qu'autour du porteur et des mèches le cas échéant, assure un excellent transfert mécanique des efforts de traction entre ces constituants du câble et toute structure sur laquelle le bloc est fixé. De plus, la liberté des fibres optiques vis-à-vis du jonc est préservée dans leur traversée du bloc de rétention, du fait de leur passage libre dans des fourreaux moulés dans le bloc et se prolongeant sous la gaine du câble.

Les détails et avantages de l'invention apparaîtront plus clairement à la lecture de la description qui va suivre, en se référant aux dessins annexés dans lesquels :
- la figure 1 est une coupe transversale d'un câble à fibres optiques à structure dite "libre" ; et
- la figure 2 est une coupe longitudinale d'un dispositif de rétention pour un câble du type de la figure 1, conformément à la présente invention.

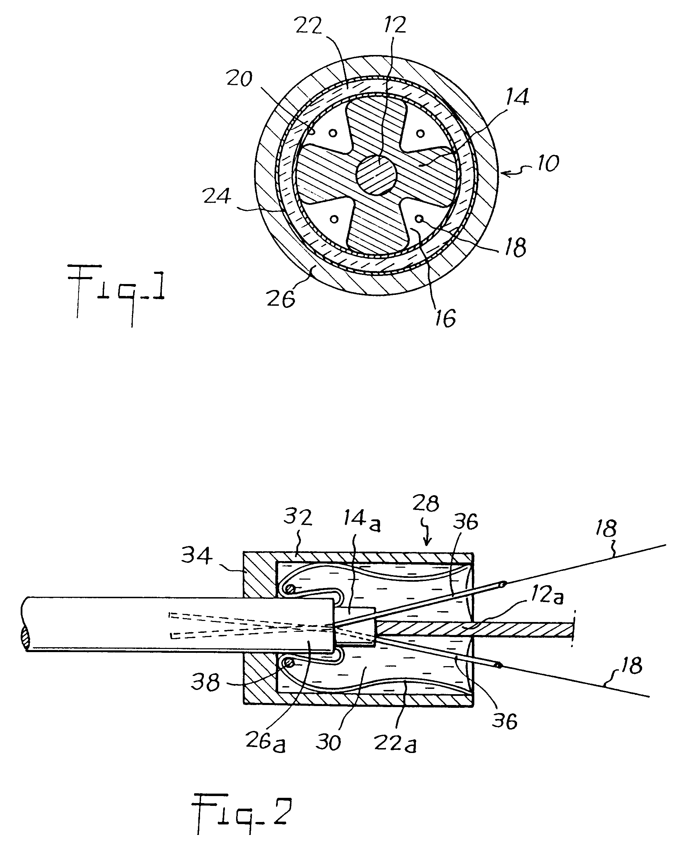

Le câble 10 à fibres optiques illustré en coupe à la figure 1 comprend, du centre vers la périphérie :
- un porteur 12, réalisé sous forme d'une tige souple, de préférence en résine armée de fibres de verre, ou de toutes autres fibres synthétiques de haute résistance, ou qui peut-être en métal.
- un jonc 14, de forme sensiblement cylindrique, entourant le porteur 12 et pourvu à sa périphérie de rainures hélicoïdales 16, le pas des rainures étant important, de l'ordre de plusieurs fois le diamètre du jonc ;
- un certain nombre de fibres optiques 18, disposées chacune dans une rainure respective, les dimensions transversales des rainures étant telles que les fibres y sont reçues librement, c'est-à-dire qu'elles ne subissent pas les contraintes mécaniques imparties aux autres constituants du câble, tant longitudinalement que transversalement, au moins jusqu'à un certain seuil.

Le jonc est entouré par un premier ruban de protection 20, puis par des mèches de renfort tressées 22, entourées elles-mêmes par un second ruban de protection 24, l'ensemble étant enfin enveloppé dans une gaine de protection 26. Les mèches de renfort sont en matériau à haute résistance, comme par exemple une matière aramide.

Si l'on se réfère maintenant à la figure 2, le câble 10 est représenté en vue latérale et équipé d'un dispositif de rétention 28 conforme à la présente invention, représenté en coupe à la figure.

Le dispositif se compose essentiellement d'un bloc de rétention 30 en résine, moulé directement autour du porteur 12, du jonc rainuré 14, des mèches de renfort 22 et de la gaine de protection 26, sur des zones dénudées de chacun de ces éléments, soit successivement une zone 12a du porteur, une zone 14a du jonc, une longueur de mèches 22a et une zone 26a de la gaine.

Le moulage du bloc 30 est effectué à l'intérieur d'un boîtier de moulage 32 sensiblement cylindrique, fermé à une extrémité par un fond 34 percé d'un orifice permettant le passage de la gaine 26 et ouvert à son autre extrémité. Ce boîtier peut comporter diverses formes permettant sa fixation sur une structure fixe, comme par exemple des filetages, des clés anti-rotation et des portées pour joints d'étanchéité. Du fait de son moulage directement au contact des différents constituants mécaniques du câble, le bloc 30 assure une excellente transmission des efforts mécaniques entre le câble et la structure fixe.

La liberté des fibres optiques vis-à-vis du câble est également assurée à la traversée du bloc de rétention 30, de la manière suivante :
Chaque fibre optique 18 est reçue avec un léger jeu dans un fourreau de passage 36, les fourreaux étant engagés à une extrémité dans les rainures correspondantes aux fibres optiques, c'est-à-dire sous la gaine protectrice et sous les mèches de renfort tressées, sur une certaine distance compte tenu de la souplesse des fourreaux et du pas de l'hélice des rainures, en tout état de cause une distance suffisante pour éviter une pénétration de la résine dans les rainures lors du remplissage du boîtier de moulage avec la résine liquide. Les fourreaux ont une longueur telle qu'ils dépassent à leur autre extrémité au-delà du bloc 30.

En raison de leur traversée du boîtier 32, les fourreaux sont par conséquent également moulés dans le bloc de résine 30 mais, les fibres optiques les traversant librement, le montage libre des fibres est également assuré à la traversée du bloc.

On remarquera que les mèches de renfort sont noyées dans le bloc suivant un parcours sinueux, de la manière suivante : à partir de l'extrémité dénudée de la gaine, elles sont tout d'abord recourbées en direction du fond du boîtier et maintenues en place par un anneau élastique 38 autour de la gaine, puis recourbées à nouveau en direction de l'ouverture du boîtier.

On peut renforcer le raccordement sur la gaine soit en prévoyant un dispositif complémentaire de serrage sur la gaine (non représenté) comme bien connu, soit en fendant l'extrémité 26a de la gaine en plusieures languettes longitudinales et en recourbant ces languettes sous forme d'oeillets noyés dans la résine (non représenté). Dans ce cas, les languettes pourront avantageusement suivre le même parcours sinueux que les mèches de renfort.

Si nécessaire, on peut assurer une étanchéité entre les fourreaux et les fibres optiques au moyen d'un liquide visqueux ou un gel approprié, comme par exemple un gel à base de silicones.

Un des avantages de l'invention réside également dans le fait que les fibres optiques, après leur sortie des fourreaux de passage, sont totalement libres vis-à-vis des éléments de rétention du câble. En d'autres termes, l'élément de rétention est suffisamment compact pour dégager largement les fibres et laisser un libre accès à leur extrémité pour préparer la connexion.

## Revendications

1. Dispositif de rétention (28) mécanique pour une extrémité d'un câble (10) à fibres optiques à structure libre, ledit câble étant composé au moins d'un jonc (14) sensiblement cylindrique pourvu de rainures (16) à sa périphérie, dans lesquelles sont reçues librement les fibres optiques (18), et d'une gaine protectrice (26) extérieure, ledit dispositif comprenant un boîtier (32) et un fourreau de passage (36) pour chaque fibre qui le traverse librement, caractérisé en ce qu'il comprend en outre un bloc de rétention (30) moulé directement autour d'une portion (26a) de la gaine et directement autour d'une portion (14a) du jonc dénuée de ladite gaine, lesdites portions étant adjacentes, en ce que lesdits fourreaux se prolongent d'un côté entre la gaine protectrice et les rainures respectives du jonc, lesdits fourreaux étant moulés dans ledit bloc de rétention (30) et traversant celui-ci.

2. Dispositif de rétention selon la revendication 1, caractérisé en ce que ledit bloc de rétention (30) est moulé dans ledit boîtier (32).

3. Dispositif de rétention selon l'une des revendications 1 ou 2, caractérisé en ce que le bloc (30) est réalisé en résine.

4. Dispositif de rétention selon l'une quelconque des revendications 1 à 3, caractérisé en ce que les fourreaux sont remplis d'un produit d'étanchéité.

5. Dispositif de rétention selon l'une quelconque des revendications 1 à 4, destiné à un câble comprenant également un porteur central (12), caractérisé en ce que le bloc de rétention est également moulé directement autour d'une portion dénudée (12a) du porteur central.

6. Dispositif selon l'une quelconque des revendications 1 à 5, destiné à un câble comprenant également des mèches de renfort (22) interposées entre le jonc et la gaine, caractérisé en ce que le bloc de rétention est également moulé directement autour d'une portion dénudée (22a) des mèches de renfort.

7. Dispositif selon l'une quelconque des revendications 1 à 6, caractérisé en ce que la portion dénudée de gaine (26a) est fendue en plusieurs languettes recourbées et noyées dans le bloc de rétention.

## Claims

1. Mechanical holding device (28) for a free-structure optical fiber cable (10), said cable being composed of at least a substantially cylindrical core (14) provided with peripheral grooves (16) in which optical fibers (18) are freely received, and an outer protective jacket (26), said device comprising a box (32) and a passing tube (36) for each fiber which passes through it freely, characterizd in that it further comprises a retention block (30) molded directly around a portion (26a) of the jacket and directly around a portion (14a) of the core without said jacket, said portions being adjacent, in that said tubes extend on one side between the protective jacket and the respective grooves of the cores, said tubes being molded in said retention block (30) and passing through it.

2. Holding device according to claim 1, characterized in that said retention block (30) is molded in said box (32).

3. Holding device according to one of claims 1 or 2, characterized in that the block (30) is made of resin.

4. Holding device according to any one of claims 1 to 3, characterized in that the tubes are filled with a sealant.

5. Holding device according to any one of claims 1 to 4, for use with a cable that also includes a central strength member (12), characterized in that the retention block is also directly molded around a bared portion (12a) of the central strength member.

6. Device according to any one of claims 1 to 5, for use with a cable also including reinforcing braiding (22) interposed between the core and the jacket, characterized in that the retention block is also directly molded around a bared portion (22a) of the reinforcing braiding.

7. Device according to any one of claims 1 to 6, characterized in that the bared portion of the jacket (26a) is split into a plurality of tongues, which tongues are curved and embedded within the retention block.

## Patentansprüche

1. Mechanische Rückhaltevorrichtung (28) für ein äußerstes Ende eines Optikfaserkabels (10) mit freier Struktur, wobei das Kabel zumindest aus einem allgemein zylindrischen Rohrstrang (14), der an seinem Umfang mit Nuten (16) versehen ist, in denen die optischen Fasern (18) frei aufgenommen sind, und einem äußeren Schutzmantel (26) besteht, wobei die Vorrichtung ein Gehäuse (32) und eine Durchlaßbuchse (36) für jede Faser aufweist, die frei hindurch geht, dadurch gekennzeichnet, daß die Vorrichtung ferner einen Halteblock (30) aufweist, der direkt um einen Teil (26a) des Mantels und direkt um einen Teil (14a) des von dem Mantel freigelegten Rohrstrangs gegossen ist, wobei die genannten Teile benachbart zueinander sind, sowie dadurch gekennzeichnet, daß sich die Hülsen auf einer Seite durch den Schutzmantel und die entsprechenden Nuten des Rohrs verlängern, wobei die Hülsen in den Halteblock (30) eingegossen sind und durch diesen hindurch gehen.

2. Haltevorrichtung nach Anspruch 1, dadurch gekennzeichnet, daß der Halteblock (30) in dem Gehäuse (32) gegossen ist.

3. Haltevorrichtung nach einem der Ansprüche 1 oder 2, dadurch gekennzeichnet, daß der Block (30) aus einem Harz besteht.

4. Haltevorrichtung nach einem der Ansprüche 1 bis 3, dadurch gekennzeichnet, daß die Hülsen mit einem Dichtungsmaterial aufgefüllt sind.

5. Haltevorrichtung nach einem der Ansprüche 1 bis 4, bestimmt für ein Kabel, das auch einen Mittelträger (12) aufweist, dadurch gekennzeichnet, daß der Halteblock auch direkt um einen freigelegten Teil (12a) des Mittelträgers gegossen wird.

6. Vorrichtung nach einem der Ansprüche 1 bis 5, bestimmt für ein Kabel, das auch Verstärkungsstränge (22) aufweist, die zwischen dem Rohrstrang und dem Mantel angeordnet sind, dadurch gekennzeichnet, daß der Halteblock auch direkt um einen freigelegten Teil (22a) der Verstärkungsstränge gegossen ist.

7. Vorrichtung nach einem der Ansprüche 1 bis 6, dadurch gekennzeichnet, daß der freigelegte Teil des Mantels (26a) in mehrere Zungen aufgespalten ist, die umgebogen und in dem Halteblock versenkt sind.
